# EUROPÄISCHE PATENTSCHRIFT

(11) **EP 3 270 091 B1**
(45) Veröffentlichungstag und Bekanntmachung des Hinweises auf die Patenterteilung: **20.11.2019**
(21) Anmeldenummer: 17172809.0
(22) Anmeldetag: 24.05.2017
(51) Int. Cl.: F41G 5/08, G01S 17/66, G01S 3/786, G01S 13/66

(54) **VERFAHREN UND VORRICHTUNG ZUM STEUERN DER LAGEPOSITION EINER MIT EINER ZIELVERFOLGUNGSEINRICHTUNG VERSEHENEN, UM DREI RAUMACHSEN SCHWENKBAREN PLATTFORM**
METHOD AND DEVICE FOR CONTROLLING THE POSITION OF A PLATFORM WHICH CAN BE PIVOTED AROUND THREE AXES WITH A TARGET TRACKING DEVICE
PROCÉDÉ ET DISPOSITIF DE COMMANDE DE LA POSITION D'UNE PLATE-FORME PIVOTANT SUR TROIS AXES POURVUE D'UN DISPOSITIF DE POURSUITE DE CIBLE

(30) Priorität: 13.07.2016 DE 102016008414
(43) Veröffentlichungstag der Anmeldung: 17.01.2018
(73) Patentinhaber: MBDA Deutschland GmbH, 86529 Schrobenhausen (DE)
(72) Erfinder: BRÄNDLE, Markus, 85290 Geisenfeld (DE)
(74) Vertreter: Isarpatent

(56) Entgegenhaltungen:
- EP-A1- 0 276 454
- DE-C1- 2 353 605
- GB-A- 2 060 839
- US-B1- 6 236 899

## Beschreibung

### TECHNISCHES GEBIET

Die vorliegende Erfindung betrifft ein Verfahren zum Steuern der Lageposition einer mit einer Zielverfolgungseinrichtung versehenen, um drei Raumachsen schwenkbaren Plattform. Sie betrifft weiterhin eine Vorrichtung zur Durchführung eines solchen Verfahrens, also eine Steuerungsvorrichtung für eine entsprechend ausgestattete schwenkbare Plattform.

### HINTERGRUND DER ERFINDUNG

Zur Verfolgung von sich bewegenden Zielen werden mit einer Zielverfolgungseinrichtung versehene und um drei Raumachsen schwenkbare Plattformen, so genannte Trackingplattformen, verwendet, die Antriebsorgane aufweisen, welche mit einer Steuerungsvorrichtung verbunden sind und von dieser Steuerbefehle empfangen, um die Plattformlage im Raum so zu verändern, dass die auf der Plattform vorgesehene Zielverfolgungseinrichtung dem sich bewegenden Ziel nachgeführt wird. Dazu sind auf der Plattform Erfassungsvorrichtungen für die Position und/oder die Lage der Plattform im Raum vorgesehen, die die erfassten Werte an die Steuerungsvorrichtung weiterleiten, welche diese erfassten Werte dann auswertet und die Steuerbefehle erzeugt. Schwingungen (Resonanz) am Abtrieb der Plattform, können allerdings dazu führen, dass die Erfassungsvorrichtung ebenfalls schwingt, wodurch die Zielverfolgung deutlich erschwert oder komplett unmöglich gemacht wird. Eine Trackingplattform mit niedriger Eigenresonanz kann daher ohne zusätzliche Maßnahmen nur mit niedriger Systemdynamik betrieben werden, da sonst die Resonanz zu einer Instabilität im Trackingkreis, also im Regelungskreis der Steuerungsvorrichtung, führt.

### STAND DER TECHNIK

Üblicherweise werden den Antriebsorganen derartiger Plattformen von der zugeordneten Steuerungsvorrichtung neben anzufahrenden Sollpositionen auch Momentenkommandos übergeben, um beispielsweise Schwingungen, die zwischen Antrieb und Abtrieb auftreten können, zu dämpfen. Dazu bedarf es entsprechender Schnittstellen zur Übergabe der Sollpositionen und der Momentenkommandos. Es gibt jedoch Plattformen, bei denen keine Momentenschnittstellen, sondern nur Sollpositions-Schnittstellen vorgesehen sind. Die Resonanz kann also herkömmlicherweise zum Beispiel durch Differenzdrehzahlrückführung oder durch Zustandsregelung beherrscht werden, doch ist dies dann nicht möglich, wenn nur eine Positionsschnittstelle zur Ansteuerung der Plattform zur Verfügung steht.

EP276454A1 offenbart ein Zielverfolgungssystem aus dem Stand der Technik.

### DARSTELLUNG DER ERFINDUNG

Aufgabe der vorliegenden Erfindung ist es daher, ein Verfahren und eine Vorrichtung zum Steuern der Lageposition einer mit einer Zielverfolgungseinrichtung versehenen, um drei Raumachsen schwenkbaren Plattform anzugeben, das beziehungsweise die es ermöglicht, auch bei nur mit einer Sollpositionsschnittstelle versehenen Plattformen eine Schwingungsdämpfung vorzunehmen.

Der auf das Verfahren gerichtete Teil der Aufgabe wird gelöst durch das Verfahren mit den Merkmalen des Anspruchs 1.

Dieses erfindungsgemäße Verfahren zum Steuern der Lageposition einer mit einer Zielverfolgungseinrichtung versehenen, um drei Raumachsen schwenkbaren schwingungsempfindlichen Plattform umfasst die Schritte:
a) Ermitteln der Istposition der Plattform;
b) Ermitteln einer Abweichung der Istposition von einer Sollposition für die Plattform, in der eine auf der Plattform vorgesehene Zielerfassungseinrichtung ein sich an einer Zielposition befindendes Ziel anvisiert;
c) Rekonstruieren der absoluten Zielposition des Ziels aus der im Schritt a) ermittelten Istposition der Plattform und der im Schritt b) ermittelten Abweichung;
d) Schätzen einer Bewegungstrajektorie des Ziels mittels eines Filters, wobei der Filter ein Kalman-Filter ist;
e) Erzeugen eines Stellkommandos mittels einer einen Trackingregler aufweisenden Steuerungseinrichtung für die Plattform zum Anfahren der Sollposition auf der Basis der im Schritt b) ermittelten Abweichung und der im Schritt d) geschätzten Bewegungstrajektorie;
f) Beaufschlagen einer Bewegungsvorrichtung für die Plattform mit dem im Schritt e) erzeugten Stellkommando;
g) wobei mittels des Filters Schwingungen der im Schritt b) ermittelten Abweichung detektiert und im Fall des Auftretens von Schwingungen Filterparameter und/oder Verstärkungsfaktoren im Trackingregler angepasst werden, wobei die Detektion von Schwingungen durch eine Auswertung der quadrierten Innovationsfolge des Filters erfolgt, wobei die Innovationsfolge eine Abweichung zwischen einem Messwert und einem mit Hilfe eines zugrundeliegenden Systemmodells berechneten Schätzwert angibt.

### VORTEILE

Dieses Verfahren gestattet es, auch bei Plattformen, die nur mit einer Sollpositionsschnittstelle versehen sind, auftretende Schwingungen wirksam zu dämpfen oder sogar zu kompensieren. Eine mit diesem Verfahren betriebene Plattform weist somit eine geringere Schwingungsneigung auf, was zu einer erhöhten Systemperformance führt. Über einen geeigneten Filter werden dabei Schwingungen im System detektiert und in diesem Fall die Filterparameter und Verstärkungsfaktoren im Trackingregler angepasst.

Weitere bevorzugte und vorteilhafte Ausgestaltungsmerkmale des erfindungsgemäßen Verfahrens sind Gegenstand der Unteransprüche 2 bis 4.

Von Vorteil ist es, wenn die Schritte a) bis g) in zeitlichem Abstand wiederholt werden.

Vorteilhaft ist auch eine Weiterbildung des Verfahrens, bei der das vom Trackingregler ausgegebene Stellkommando um die detektierten Schwingungen zu einem resultierenden Stellkommando korrigiert wird, mit dem in Schritt f) die Stelleinrichtung beaufschlagt wird.

Von Vorteil ist es auch, wenn die Innovationsfolge tiefpassgefiltert und / oder gewichtet wird. Dabei erfolgt die Tiefpassfilterung bevorzugt mit einem Tiefpass erster Ordnung. Die Gewichtung erfolgt vorzugsweise mit einer Inversen der Matrix, die mit Elementen der a-posteriori-Kovarianzmatrix des Filters besetzt ist.

Der auf die Vorrichtung gerichtete Teil der Aufgabe wird gelöst durch die Vorrichtung gemäß Anspruch 5.

Diese Vorrichtung ist ausgestaltet zur Durchführung des erfindungsgemäßen Verfahrens zum Steuern der Lageposition einer mit einer Zielverfolgungseinrichtung versehenen, um drei Raumachsen schwenkbaren Plattform, wozu die Vorrichtung versehen ist mit der Zielerfassungseinrichtung, der Bewegungsvorrichtung für die Plattform, der Steuerungseinrichtung und einer Lageerfassungseinrichtung.

Zusätzlich weist die Steuerungseinrichtung einen Trackingregler und ein Filter auf.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen schematischen Aufbau einer erfindungsgemäßen Vorrichtung und
- Fig. 2: ein schematisches Blockschaubild eines Regelkreises einer für ein erfindungsgemäßes Verfahren ausgestalteten Steuerungseinrichtung für eine um drei Raumachsen schwenkbare Plattform.

### DARSTELLUNG VON BEVORZUGTEN AUSFÜHRUNGSBEISPIELEN

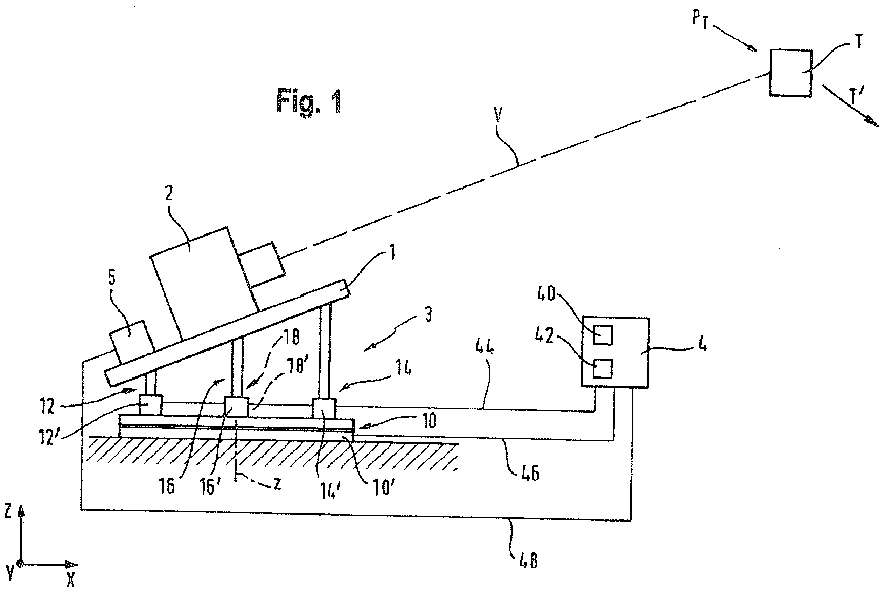

Eine schwingungsempfindliche Plattform 1 ist mit einer Zielerfassungseinrichtung 2 vorgesehen, mit der ein sich an einer Zielposition P_{T} befindendes bewegendes Ziel T anvisierbar ist, wie es in Fig. 1 durch die Visierlinie V symbolisch dargestellt ist. Die Plattform 1 ist mittels einer Bewegungsvorrichtung 3 um die drei Raumachsen X, Y und Z schwenkbar. Symbolisch ist diese Bewegungsvorrichtung 3 in Fig. 1 durch eine Drehscheibe 10 mit einer Drehachse z dargestellt, mit der die Plattform 1 um die Hochachse Z schwenkbar ist, und durch Neigungsaktuatoren 12, 14, 16, 18 (hinter 16 verborgen), mit denen die Plattform um die verbleibenden beiden Raumachsen X und Y schwenkbar ist.

Eine in Fig. 1 nur schematisch dargestellte Steuerungseinrichtung 4 weist einen Trackingregler 40 und einen Filter 42 auf und ist zur Übertragung von Stellkommandos mit den Antrieben 12', 14', 16', 18' der Neigungsaktuatoren 12, 14, 16, 18 und dem Antrieb 10' der Drehscheibe 10 mittels Steuerleitungen 44, 46 verbunden.

An oder auf der Plattform 1 ist eine Lageerfassungseinrichtung 5 vorgesehen, mit der die Lage der Plattform 1 im Raum bestimmt werden kann. Die Lageerfassungseinrichtung 5 ist mittels einer Datenleitung 48 mit der Steuerungseinrichtung 4 zur Übertragung von Positionsdaten verbunden.

Die Zielerfassungseinrichtung 2, die Bewegungsvorrichtung 3, die Steuerungseinrichtung 4 und die Lageerfassungseinrichtung 5 bilden zusammen mit der Plattform 1 eine Zielverfolgungseinrichtung.

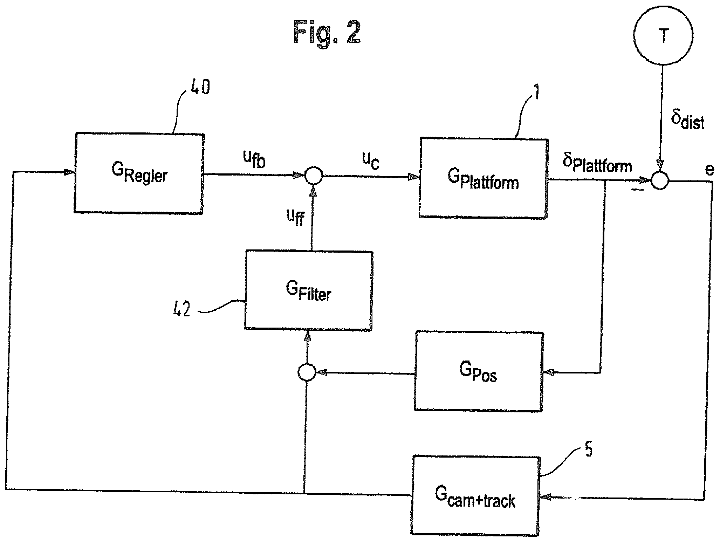

Fig. 2 zeigt ein schematisches Blockschaubild eines Regelkreises einer für ein erfindungsgemäßes Verfahren ausgestalteten Steuerungseinrichtung für eine um drei Raumachsen schwenkbare Plattform.

Das erfindungsgemäße Verfahren, mit dem die Performance einer schwingungsempfindlichen Plattform 1 zum Erfassen und Verfolgen von Zielen verbessert werden kann, wobei der Plattform 1 über die zur Verfügung stehende Schnittstelle lediglich Sollpositionen vorgegeben werden können, wird anhand der Fig. 2 beschrieben.

G_{Plattform} bezeichnet die Dynamik der Plattform 1, mit der diese einem Stellkommando u_{c} folgt. Über den Trackingregler 40 G_{Regler} wird dazu ein Stellkommando u_{fb} so erzeugt, dass die Differenz aus der aktuellen Plattformposition (δ_{plattform}) und der Position des Ziels (δ_{dist}) verringert und letztlich idealerweise komplett zu Null ausgeregelt wird. Die Abweichung von Ziel- und Plattformposition wird über die geeignete Erfassungsvorrichtung 5 (G_{carn+track}) gemessen. Die Erfassungsvorrichtung 5 ist auf dem Teil der Plattform 1 befestigt, der dem Ziel T nachgeführt wird. Im Folgenden wird dieser Teil der Plattform 1 als Abtrieb bezeichnet.

Die Systemperformance der Plattform 1 kann zusätzlich verbessert werden, indem die Bewegung des Ziels T geschätzt wird. Zu diesem Zweck wird in einem Filter 42 (G_{Filter}) aus der gemessenen Plattformposition und der Abweichung zwischen Ziel- und Plattformposition die absolute Zielposition rekonstruiert. Über den Filter 42 wird dann eine Trajektorie T' der weiteren Bewegung des Ziels T geschätzt und es wird ein Stellkommando u_{ff} für die Plattform 1 berechnet, so dass die Plattform 1 stets der geschätzten Zieltrajektorie T' folgt. Der Trackingregler 40 wird dann nur noch benötigt, um Ungenauigkeiten der Vorsteuerung, die sich zum Beispiel aufgrund im Filter 42 nicht modellierter Effekte ergeben, zu kompensieren und so die Gesamtperformance weiter zu erhöhen.

Das Stellkommando für die Plattform 1 setzt sich somit aus den Signalen des Filterausgangs u_{ff} und des Reglerausgangs u_{fb} zusammen.

Um zu vermeiden, dass Schwingungen am Abtrieb der Plattform 1 dazu führen, dass die Lageerfassungseinrichtung 5 ebenfalls schwingt und dadurch die Zielverfolgung deutlich erschwert oder komplett unmöglich gemacht wird, werden im Rahmen dieser Erfindung die folgenden Maßnahmen angewendet:
- Über den Filter 40 der Steuerungseinrichtung 4 für die Plattform 1 werden Schwingungen des Abtriebs detektiert.
- Bei dem zur Schätzung verwendeten Filter 40 handelt es sich vorzugsweise um einen Kalman-Filter.
- Im Rahmen der vorgeschlagenen Maßnahmen wird bevorzugterweise zur Schwingungsdetektion die so genannte "Innovationsfolge" des Filters 40 ausgewertet. Diese Innovationsfolge gibt die Abweichung zwischen einem Messwert und einem mit Hilfe des zugrundeliegenden Systemmodells berechneten Schätzwert an. Bei perfekter Modellierung der Realität durch das Filtermodell würde die Innovationsfolge dann weißes Rauschen ausgeben.
- Die Innovationsfolge kann des Weiteren noch tiefpassgefiltert und/oder gewichtet werden (zum Beispiel mit der Fehlerkovarianz des Filters 40). Ein großer aktueller skalarer Wert der quadrierten, skalierten und tiefpassgefilterten Innovationsfolge bedeutet dabei eine schlechte Übereinstimmung zwischen Modell und Messung. Für die vorliegende Vorrichtung wird dies so interpretiert, dass in der Vorrichtung Schwingungen auftreten, die im Filtermodell nicht berücksichtigt sind.
- Im Feedback-Zweig der Plattformsteuerung wird der gefilterte und gewichtete vorgenannte Wert verwendet um die Reglerverstärkung anzupassen. Bei schlechter Übereinstimmung zwischen Modell und Messung wird die Reglerverstärkung abgesenkt.
- Für die Vorsteuerung wird der vorgenannte Wert verwendet, um innerhalb des Filters die Gewichtung zwischen Modell und Messung verschieben, so dass bei einem großen Wert und damit schlechter Übereinstimmung von Modell und Messung das Filtermodell stärker gewichtet wird.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: schwingungsempfindliche Plattform
- 2: Zielerfassungseinrichtung
- 3: Bewegungsvorrichtung
- 4: Steuerungseinrichtung
- 5: Lageerfassungseinrichtung
- 10: Drehscheibe
- 10': Antrieb
- 12: Neigungsaktuator
- 12': Antrieb
- 14: Neigungsaktuator
- 14': Antrieb
- 16: Neigungsaktuator
- 16': Antrieb
- 18: Neigungsaktuator
- 18': Antrieb
- 40: Trackingregler
- 42: Filter
- 44: Steuerleitung
- 46: Steuerleitung
- 48: Datenleitung
- P_{T}: Zielposition
- T: Ziel
- T': Trajektorie
- u_{c}: Stellkommando
- V: Visierlinie
- X: Raumachse
- Y: Raumachse
- z: Drehachse
- Z: Raumachse / Hochachse

## Patentansprüche

1. Verfahren zum Steuern der Lageposition einer mit einer Zielverfolgungseinrichtung versehenen, um drei Raumachsen schwenkbaren schwingungsempfindlichen Plattform (1) mit den Schritten:
a) Ermitteln der Istposition der Plattform (1);
b) Ermitteln einer Abweichung der Istposition von einer Sollposition für die Plattform (1), in der eine auf der Plattform (1) vorgesehene Zielerfassungseinrichtung (2) ein sich an einer Zielposition (P_{T}) befindendes Ziel (T) anvisiert;
c) Rekonstruieren der absoluten Zielposition (P_{T}) des Ziels (T) aus der im Schritt a) ermittelten Istposition der Plattform (1) und der im Schritt b) ermittelten Abweichung;
d) Schätzen einer Bewegungstrajektorie des Ziels (T) mittels eines Filters (42), wobei der Filter ein Kalman-Filter ist;
e) Erzeugen eines Stellkommandos mittels einer einen Trackingregler (40) aufweisenden Steuerungseinrichtung (4) für die Plattform (4) zum Anfahren der Sollposition auf der Basis der im Schritt b) ermittelten Abweichung und der im Schritt d) geschätzten Bewegungstrajektorie;
f) Beaufschlagen einer Bewegungsvorrichtung (3) für die Plattform (1) mit dem im Schritt e) erzeugten Stellkommando;
g) **dadurch gekennzeichnet, dass** mittels des Filters (42) Schwingungen der im Schritt b) ermittelten Abweichung detektiert und im Fall des Auftretens von Schwingungen Filterparameter und/oder Verstärkungsfaktoren im Trackingregler (40) angepasst werden, wobei die Detektion von Schwingungen durch eine Auswertung der quadrierten Innovationsfolge des Filters (42) erfolgt, wobei die Innovationsfolge eine Abweichung zwischen einem Messwert und einem mit Hilfe eines zugrundeliegenden Systemmodells berechneten Schätzwert angibt.

2. Verfahren nach Anspruch 1,
**dadurch gekennzeichnet,**
**dass** die Schritte a) bis g) in zeitlichem Abstand wiederholt werden,

3. Verfahren nach Anspruch 1 oder 2,
**dadurch gekennzeichnet,**
**dass** die Innovationsfolge tiefpassgefiltert und/oder gewichtet wird.

4. Verfahren nach Anspruch 3,
**dadurch gekennzeichnet,**
**dass** die Tiefpassfilterung mit einem Tiefpass erster Ordnung erfolgt.

5. Vorrichtung zur Durchführung eines Verfahrens zum Steuern der Lageposition einer mit einer Zielverfolgungseinrichtung versehenen, um drei Raumachsen schwenkbaren Plattform (1) gemäß einem der vorhergehenden Ansprüche, wozu die Vorrichtung versehen ist mit der Zielerfassungseinrichtung (2), der Bewegungsvorrichtung (3) für die Plattform, der Steuerungseinrichtung (4) und einer Lageerfassungseinrichtung (5) und wobei die Steuerungseinrichtung (4) den Trackingregler (40) und den Filter (42) aufweist.

## Claims

1. Method for controlling the positioning of an oscillation-sensitive platform (1), which is provided with a target-tracking device and can be pivoted about three spatial axes, comprising the steps of:
a) determining the current positioning of the platform (1);
b) determining a deviation of the current positioning from a desired positioning for the platform (1), in which a target detection device (2) provided on the platform (1) is aimed at a target (T) located at a target position (P_{T}) ;
c) reconstructing the absolute target position (P_{T}) of the target (T) from the current positioning of the platform (1) determined in step a) and the deviation determined in step b);
d) estimating a movement trajectory of the target (T) using a filter (42), the filter being a Kalman filter;
e) generating an operating command using a control device (4), which has a tracking regulator (40), for the platform (4), so as to approach the desired positioning on the basis of the deviation determined in step b) and of the movement trajectory estimated in step d);
f) applying the operating command generated in step e) to a movement device (3) for the platform (1);
g) **characterised in that** oscillations in the deviation determined in step b) are determined by means of the filter (42), and if any oscillations occur filter parameters and/or amplification factors are adapted in the tracking regulator (40), oscillations being detected by evaluating the squared innovation sequence of the filter (42), the innovation sequence specifying a deviation between a measured value and an estimated value which is calculated using an underlying system model.

2. Method according to claim 1,
**characterised**
**in that** steps a) to g) are repeated at a time interval.

3. Method according to either claim 1 or claim 2,
**characterised**
**in that** the innovation sequence is low-pass-filtered and/or weighted.

4. Method according to claim 3,
**characterised**
**in that** the low-pass filtering takes place using a first-order low pass.

5. Device for carrying out a method for controlling the positioning of a platform (1), which is provided with a target-tracking device and can be pivoted about three spatial axes, for which purpose the device is provided with the target detection device (2), the movement device (3) for the platform, the control device (4) and a positioning detection device (5), wherein the control device (4) has the tracking regulator (40) and the filter (42).

## Revendications

1. Procédé de commande de la position d'une plate-forme sensible aux oscillations (1) pourvue d'un système de poursuite de cible et pouvant pivoter autour de trois axes spatiaux, comprenant les étapes consistant à :
a) déterminer la position réelle de la plate-forme (1) ;
b) déterminer un écart entre la position réelle et une position de consigne de la plate-forme (1) dans laquelle un système de détection de cible (2) prévu sur la plate-forme (1) vise une cible (T) se trouvant à une position de cible (P_{T}) ;
c) reconstituer la position de cible absolue (P_{T}) de la cible (T) à partir de la position réelle de la plate-forme (1) déterminée à l'étape a) et de l'écart déterminé à l'étape b) ;
d) estimer une trajectoire de déplacement de la cible (T) au moyen d'un filtre (42), le filtre étant un filtre de Kalman ;
e) générer un ordre de positionnement pour la plate-forme (4) au moyen d'un système de commande (4) présentant un régulateur de poursuite (40) afin de la déplacer vers la position de consigne, sur la base de l'écart déterminé à l'étape b) et de la trajectoire de déplacement estimée à l'étape d) ;
f) appliquer l'ordre de positionnement généré à l'étape e) à un dispositif de déplacement (3) de la plate-forme (1);
g) **caractérisé en ce que** des oscillations de l'écart déterminé à l'étape b) sont détectées au moyen du filtre (42) et, en cas de présence d'oscillations, des paramètres de filtre et/ou des facteurs d'amplification sont adaptés dans le régulateur de poursuite (40), la détection des oscillations étant effectuée en évaluant la séquence d'innovation au carré du filtre (42), la séquence d'innovation indiquant un écart entre une valeur mesurée et une valeur estimée calculée à l'aide d'un modèle de système sous-jacent.

2. Procédé selon la revendication 1,
**caractérisé en ce**
**que** les étapes a) à g) sont répétées à intervalles réguliers.

3. Procédé selon la revendication 1 ou 2,
**caractérisé en ce**
**que** la séquence d'innovation est filtrée passe-bas et/ou pondérée.

4. Procédé selon la revendication 3,
**caractérisé en ce**
**que** le filtrage passe-bas est effectué avec un filtre passe-bas du premier ordre.

5. Dispositif pour la mise en œuvre d'un procédé de commande de la position d'une plate-forme (1) pourvue d'un système de poursuite de cible et pouvant pivoter autour de trois axes spatiaux selon l'une des revendications précédentes,
auquel but le dispositif est pourvu du système de détection de cible (2), du dispositif de déplacement (3) de la plate-forme, du système de commande (4) et d'un système de détection de position (5), et dans lequel le système de commande (4) présente le régulateur de poursuite (40) et le filtre (42).
